# EUROPÄISCHE PATENTSCHRIFT

(11) **EP 1 054 797 B1**
(45) Veröffentlichungstag und Bekanntmachung des Hinweises auf die Patenterteilung: **04.06.2008**
(21) Anmeldenummer: 99907469.3
(22) Anmeldetag: 01.02.1999
(51) Int. Cl.: B60S 1/34

(54) **VIERGELENKWISCHARM FÜR EINE SCHEIBENWISCHANLAGE**
FOUR-HINGED WIPER ARM FOR A WINDSHIELD WIPER SYSTEM
BRAS DE MONTURE D'ESSUIE-GLACE A QUATRE POINTS ARTICULES POUR SYSTEME D'ESSUIE-GLACE

(30) Priorität: 20.02.1998 DE 19807062
(43) Veröffentlichungstag der Anmeldung: 29.11.2000
(73) Patentinhaber: Valeo Wischersysteme GmbH, 74321 Bietigheim-Bissingen (DE)
(72) Erfinder: SCHOLL, Wolfgang, D-74376 Gemmrigheim (DE); BIENERT, Herbert, D-74354 Besigheim (DE)
(74) Vertreter: Dreiss, Fuhlendorf, Steimle & Becker
(86) Internationale Anmeldenummer: PCT/EP1999/000637
(87) Internationale Veröffentlichungsnummer: WO 1999/042346

(56) Entgegenhaltungen:
- EP-A- 0 182 123
- EP-A- 0 248 780
- DE-A- 19 501 211
- GB-A- 2 145 168

## Beschreibung

Die Erfindung bezieht sich auf einen Wischarm für eine Scheibenwischeranlage, insbesondere für ein Kraftfahrzeug, gemäß den Merkmalen des Oberbegriffs des Anspruchs 1.

Ein Viergelenkwischarm dieser Art ist bereits aus der DE 42 14 679 A1 bekannt geworden. Bei diesem Wischarm ist die Koppel an einer ersten Lagerstelle über einen Zylinderbolzen mit einer Antriebsschwinge und an einer zweiten Lagerstelle über einen Zylinderbolzen mit einer Steuerschwinge schwenkbar verbunden, wobei die Zylinderbolzen jeweils direkt in einer Lagerbohrung der Koppel und/oder einer Lagerbohrung der Antriebsschwinge bzw. der Steuerschwinge drehbar gelagert ist. Derartige Lagerstellen können zwar vorteilhaft mit einer geringen Bauhöhe ausgeführt werden, jedoch sind sie nicht geeignet, die beim Betrieb des Wischarmes auftretenden hohen Radial- und Axialkräfte auch über eine lange Betriebsdauer spielfrei mit hohem Wirkungsgrad zu übertragen. Bereits nach kurzer Betriebsdauer kann sich ein störendes Lagerspiel einstellen, was einerseits die Wischqualität stark vermindert und andererseits eine störende Geräuschbildung mit sich bringen kann.

Aus der GB-A-2 145 168 ist die Verwendung eines Wälzlagers für die Lagerung einer Antriebskoppel an eines Scheibenwischerantriebskurbel bekannt.

Ferner sind Nietbolzen zur Lagerung von Scheibenwischerteilen aus der EP-A-0 182 123 bekannt, die die gleichen Probleme besitzen.

Aus der DE-A-195 01 211 ist ein Viergelenkwischarm bekannt, bei dem die Koppel ebenfalls über zwei Lagerstellen mit einer Antriebsschwinge und einer Steuerschwinge schwenkbar verbunden ist. Die vom Federelement aufgebrachte Anpresskalt für das Wischblatt wird von der Schwinge abgestützt, die dadurch Axialkräfte auf die Lagerstellen ausübt.

Ausgehend von der DE-A-195 01 211 liegt der Erfindung die Aufgabe zugrunde, einen Wischarm der eingangs genannten Art dahingehend zu verbessern, dass die Lagerstellen der Koppel mit der Antriebsschwinge bzw. mit der Steuerschwinge über eine längere Betriebsdauer den hohen Anforderungen hinsichtlich einer spielfreien Übertragung großer auftretender Kräfte mit hohem Wirkungsgrad erfüllen und dennoch einfach herzustellen sind.

Die Aufgabe wird erfindungsgemäß mit den Merkmalen des Anspruchs 1 gelöst.

Bereits die Ausstattung nur einer der beiden Lagerstellen mit einem Rillenkugellager ermöglicht eine straffere und exaktere Führung der Koppel über eine längere Betriebszeit, insbesondere dann, wenn die Lagerstelle der Koppel mit der Antriebsschwinge mit einem Rillenkugellager ausgestattet ist. Das gewährleistet über eine längere Betriebszeit eine gute Wischqualität und einen geräuschärmeren Lauf der Scheibenwischeranlage. Dadurch ist gewährleistet, dass auch bei sehr großen zu übertragenden Radial- und Axialkräften über eine gewünschte lange Betriebsdauer eine spielfreie Lagerung sichergestellt ist. Rillenkugellager sind aufgrund ihres konstruktiven Aufbaus besonders gut für eine spielfreie Übertragung großer Radial- und Axialkräfte geeignet.

Derartig ausgestattete Lagerstellen halten schadlos über sehr lange Betriebszeit hohen Krafteinwirkungen in axialer und radialer Richtung stand, so dass ein derartig ausgestatteter Viergelenkwischarm über sehr lange Betriebszeiten hohen Ansprüchen bezüglich einer guten Wischqualität und eines geräuscharmen Laufes gerecht wird.

Weitere sich aus den Unteransprüchen ergebende vorteilhafte Ausgestaltungen sowie weitere Vorteile und Einzelheiten der Erfindung werden nachfolgend mit Bezugnahme auf eine Zeichnung anhand eines Ausführungsbeispieles näher beschrieben.

In der zugehörigen Zeichnung zeigen:
- Fig. 1: einen Viergelenkwischarm; und
- Fig. 2: einen senkrechten Schnitt entlang der Linie II-II in Fig. 1 durch die Koppel und die beiden Lagerstellen.

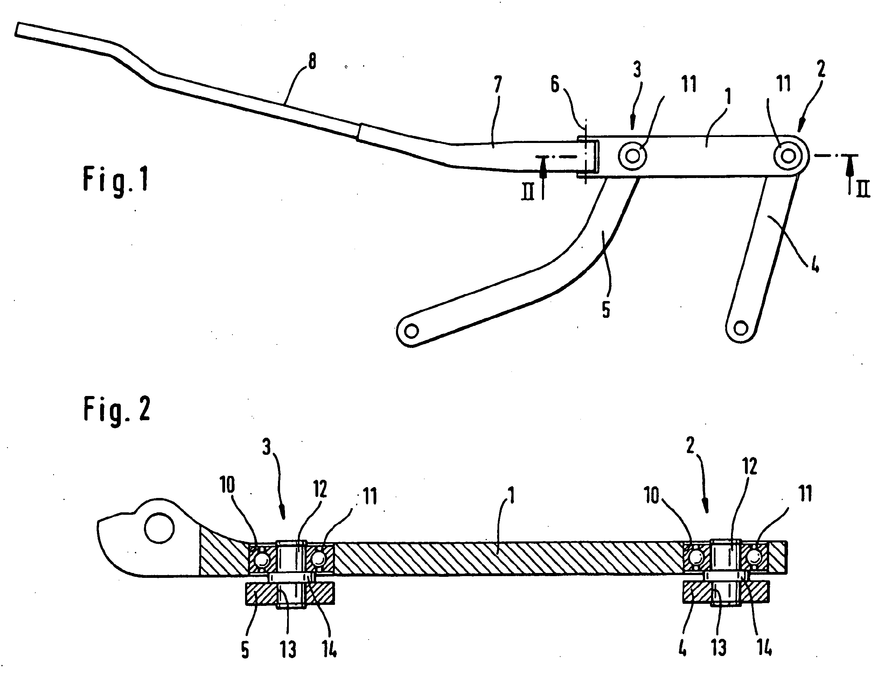

Der in Fig. 1 schematisch dargestellte Viergelenkwischarm weist als wesentlichen Bestandteil der Viergelenkkonstruktion eine Koppel 1 mit einer ersten Lagerstelle 2 und einer zweiten Lagerstelle 3 auf. An der ersten Lagerstelle 2 ist die Koppel 1 schwenkbar mit einem Ende einer Antriebsschwinge 4 verbunden, und an der zweiten Lagerstelle 3 ist die Koppel 1 schwenkbar mit einem Ende einer Steuerschwinge 5 verbunden. Das andere Ende der Antriebsschwinge 4 ist auf einer nicht gezeigten, pendelnd antreibbaren Wischerwelle zu befestigen, die in einem karosseriefesten Wischlager drehbar angeordnet ist, und das andere Ende der Steuerschwinge 5 ist auf einer Steuerachse zu befestigen, welche drehbar in einem ebenfalls karosseriefesten Lager angeordnet ist. Somit ist durch die Koppel 1, die Antriebsschwinge 4, die Steuerschwinge 5 und einen zwischen den freien Enden von Antriebsschwinge 4 und Steuerschwinge 5 verlaufenden karosseriefesten Fahrzeugteil ein Gelenkviereck gebildet.

In Figur 1 ist die Koppel 1 nach links über die Lagerstelle 3 hinaus verlängert. An diesem Ende ist um eine parallel zu der zu wischenden Scheibe verlaufende Achse 6 verschwenkbar ein Gelenkteil 7 an der Koppel 1 angelenkt. In Verlängerung des Gelenkteiles 7 ist eine an dem Gelenkteil 7 befestigte Wischstange 8 zu erkennen, die an ihrem freien Ende in bekannter Weise für die Verbindung mit einem nicht dargestellten Wischblatt ausgebildet ist. Erfindungswesentlich ist, dass an beiden Lagerstellen 2 und 3 der Koppel 1 jeweils ein Rillenkugellager 11 für die schwenkbare Verbindung der Koppel 1 mit der Antriebsschwinge 4 bzw. mit der Steuerschwinge 5 vorgesehen ist.

Weitere Einzelheiten der Erfindung sind aus der in Fig. 2 gezeigten, gegenüber Fig. 1 vergrößerten, schematischen Darstellung ersichtlich. Die in Fig. 2 gezeigte Koppel 1 besteht aus Metall und ist im Bereich der ersten Lagerstelle 2 und im Bereich der zweiten Lagerstelle 3 vom Wesen her gleich ausgebildet. Der einzige Unterschied besteht darin, dass die Koppel 1 an der ersten Lagerstelle 2 schwenkbar mit der Antriebsschwinge 4 und an der zweiten Lagerstelle 3 schwenkbar mit der Steuerschwinge 5 verbunden ist. An beiden Lagerstellen 2 und 3 weist die Koppel 1 eine Ausnehmung 10 auf, in die der Außenring eines Rillenkugellagers 11 eingepasst ist. Die Passung ist so gestaltet, dass das Rillenkugellager 11 in der Ausnehmung 10 axial und verdrehfest fixiert ist. Für eine besonders sichere axiale Fixierung können die Ränder der Ausnehmung 10 umlaufend oder lokal verstemmt sein. In diesem Zusammenhang wird darauf hingewiesen, dass das Rillenkugellager 11 in der Zeichnung der Einfachheit halber nur schematisch dargestellt ist. Da Rillenkugellager der Fachwelt allgemein als Normteile bekannt sind, kann hier auf eine genauere zeichnerische Darstellung und Beschreibung verzichtet werden.

Für den Fall, dass die Koppel 1 aus Kunststoffmaterial gefertigt wird, kann das mindestens eine Rillenkugellager 11 in die Koppel 1 eingespritzt werden.

Klar erkennbar ist, insbesondere aus den Fig. 1, dass die Verbindung zwischen der Antriebsschwinge 4 bzw. der Steuerschwinge 5 und der Koppel 1 jeweils über einen Nietbolzen 12 erfolgt. Das obere Ende des Nietbolzens 12 ist in den Innenring des Rillenkugellagers 11 eingepasst, und das untere Ende des Nietbolzens 12 ist in einen Durchbruch 13 der Antriebsschwinge 4 bzw. der Steuerschwinge 5 eingepasst. Während im mittleren Bereich des Nietbolzens 12 ein schmaler, radial abstehender Bund 14 mit der einen Seite an dem Innenring des Rillenkugellagers 11 und mit der anderen Seite an der Antriebsschwinge 4 bzw. Steuerschwinge 5 anliegt, sind die gegenüberliegenden Enden des Nietbolzens jeweils durch Taumelnietung axial und verdrehsicher an dem Innenring des Rillenkugellagers 11 bzw. an der Antriebsschwinge 4 oder Steuerschwinge 5 fixiert. Durch den Bund 14 des Nietbolzens 12 wird einerseits der für die Beweglichkeit erforderliche Abstand zwischen der Antriebsschwinge 4 oder Steuerschwinge 5 und der Koppel 1 gewährleistet und andererseits eine stabile Verbindung des Nietbolzens 12 mit dem Rillenkugellager 11 und mit der Antriebsschwinge 4 bzw. Steuerschwinge 5 sichergestellt.

Bei dem beschriebenen Viergelenkwischarm ist sowohl die Antriebsschwinge 4 als auch die Steuerschwinge 5 als Stanzteil aus Blech gefertigt. Dadurch ist es vorteilhaft möglich, den Viergelenkwischarm, insbesondere im Bereich der Viergelenkkonstruktion, mit einer geringen Bauhöhe zu fertigen. Jedoch weist die Koppel 1 eine größere Dicke auf als die Antriebsschwinge 4 oder Steuerschwinge 5. Da andererseits die Rillenkugellager 11 konstruktionsbedingt eine bestimmte Bauhöhe aufweisen müssen, ist es vorteilhaft, die Rillenkugellager 11 an der Koppel 1 anzubringen. Damit ist eine sichere und stabile Befestigung der Rillenkugellager 11 an der Koppel 1 gewährleistet. Bei anderer Ausführung der Antriebsschwinge 4 bzw. der Steuerschwinge 5 mit einer ausreichenden Dicke im Bereich der Lagerstelle 2 bzw. 3, beispielsweise als Metalldruckgussteil oder als Kunststoffspritzgussteil, kann das entsprechende Rillenkugellager 11 auch an der Antriebsschwinge 4 bzw. Steuerschwinge 5 gehalten sein, während der Bolzen 12 andererseits direkt an der Koppel 1 festgelegt ist.

Bei Verwendung eines Nietbolzens 12 für die Herstellung der Verbindung zwischen der Koppel 1 und der Antriebsschwinge 4 bzw. Steuerschwinge 5 über ein Rillenkugellager 11 kann durch Anwendung der Taumelnietung eine kostengünstige Montage bzw. Fertigung erreicht werden. Bei beidseitiger Taumelnietung des Nietbolzens 12 gewährleistet der im mittleren Bereich des Bolzens 12 ausgebildete Bund 14 eine gute Abstützung gegen die beim Nietvorgang wirkenden Kräfte.

Da die Funktion bzw. Arbeitsweise eines Viergelenkwischarmes dem Fachmann allgemein bekannt ist, braucht diese hier nicht näher beschrieben zu werden.

## Patentansprüche

1. Viergelenkwischarm für eine Scheibenwischeranlage, insbesondere für ein Kraftfahrzeug, bei welchem eine Koppel (1) über eine erste Lagerstelle (2) mit einer Antriebsschwinge (4) schwenkbar verbunden ist, wobei der Wischarm als Viergelenkwischarm ausgebildet ist und die Koppel (1) umfasst, die an einer zweiten Lagerstelle (3) mit einer Steuerschwinge (5) schwenkbar verbunden ist, und wobei ein Gelenkteil (7) an der Koppel (1) angelenkt ist und ein an dem Gelenkteil (7) oder an einer mit dem Gelenkteil (7) verbundenen Wischstange (8) anbringbares Wischblatt durch ein an dem Viergelenkwischarm angebrachtes Federelement gegen die zu wischende Scheibe drückbar ist, **dadurch gekennzeichnet, dass** beide Lagerstellen (2, 3) mit einem Axial- und Radialkräfte aufnehmenden Rillenkugellager (11) ausgestattet sind und dass der Außenring des Rillenkugellagers (11) axial gesichert und verdrehfest in einer Ausnehmung (10) der Koppel (1) oder an der Antriebsschwinge (4) bzw. Steuerschwinge (5) gehalten ist, vorzugsweise in diese eingepresst ist, während ein an der Antriebsschwinge (4) bzw. an der Steuerschwinge (5) oder an der Koppel (1) befestigter Bolzen (12) in den Innenring des Rillenkugellagers (11) eingepasst und axial gesichert und verdrehfest an diesem gehalten ist wobei der Bolzen (12) als Nietbolzen ausgebildet ist, und der Nietbolzen sowohl das Rillenkugellager (11) als auch die Antriebsschwinge (4) bzw. die Steuerschwinge (5) oder die Koppel (1) mit jeweils einem Nietkopf hintergreift.

2. Viergelenkwischarm nach einem der vorhergehenden Ansprüche, **dadurch gekennzeichnet, dass** die Antriebsschwinge (4) und die Steuerschwinge (5) aus Blech gefertigt sind, vorzugsweise Stanzteile sind.

3. Viergelenkwischarm nach einem der vorhergehenden Ansprüche, **dadurch gekennzeichnet, dass** der an der wenigstens einen Lagerstelle (2, 3) verwendete Bolzen ein Nietbolzen (12) ist.

4. Viergelenkwischarm nach Anspruch 3, **dadurch gekennzeichnet, dass** der Nietbolzen (12) einerseits durch Taumelnietung in einem Durchbruch (13) der Antriebsschwinge (4) bzw. Steuerschwinge (5) oder der Koppel (1) und andererseits durch Taumelnietung an dem Innenring des Rillenkugellagers (11) befestigt ist.

5. Viergelenkwischarm nach Anspruch 4, **dadurch gekennzeichnet, dass** der Nietbolzen (12) in seinem mittleren Bereich einen radial abstehenden Bund (14) besitzt, der mit einer Seite an der Antriebsschwinge (4) bzw. Steuerschwinge (5) und mit der anderen Seite an der Stirnfläche des Innenringes des Rillenkugellagers (11) anliegt.

6. Viergelenkwischarm nach einem der vorhergehenden Ansprüche, **dadurch gekennzeichnet, dass** er sowohl an der ersten Lagerstelle (2) der Koppel (1) mit der Antriebsschwinge (4) als auch an der zweiten Lagerstelle (3) der Koppel (1) mit der Steuerschwinge (5) mit einem Rillenkugellager (11) ausgestallet ist.

## Claims

1. Four-hinged wiper arm for a windscreen wiper module, particularly for a motor vehicle, in which a coupler (1) is hinged to a driving motion link (4) via a first bearing (2), with the wiper arm being designed as a four-hinged wiper arm and comprises the coupler (1) which is hinged at a second bearing (3) to a control motion link (5) and with a retainer (7) being linked to the coupler (4) and a wiper blade mountable on the retainer (7) or on a wiper rod (8) connected to the retainer (7) being capable of being pressed against the windscreen to be wiped by a spring element mounted on the four-hinged wiper arm, **characterised in that** both bearings (2, 3) are equipped with a deep groove ball bearing (11) taking up axial and radial forces and that the external ring of the deep groove ball bearing (11) is retained axially in a torque-proof manner in the recess (10) of the coupler (1) or on the driving motion link (4) and control motion link (5), preferably being pressed into it, whilst a bolt (12) fixed to the driving motion link (4) and to the control motion link (5) or to the coupler (1) is fitted into the internal ring of the deep groove ball bearing (11) and is axially secured in a torque-proof manner on the latter, with the bolt (12) being designed as a clinch bolt and the clinch bolt grips behind both the deep groove ball bearing (11) and the driving motion link (4) and the control motion link (5) or the coupler (1) with one rivet head respectively.

2. Four-hinged wiper arm according to one of the above claims, **characterised in that** that driving motion link (4) and the control motion link (5) are manufactured from metal sheet and are preferably punched components.

3. Four-hinged wiper arm according to one of the above claims, **characterised in that** the bolt used at the at least one bearing (2, 3) is a clinch bolt (12).

4. Four-hinged wiper arm according to claim 3, **characterised in that** the clinch bolt (12) is fixed on the one hand by wobble riveting in an opening (13) in the driving motion link (4) and control motion link (5) or the coupler (1) and on the other hand is fixed to the internal ring of the deep groove ball bearing (11).

5. Four-hinged wiper arm according to claim 4, **characterised in that** the central area of the clinch bolt (12) has a radially projecting flange (14), one side of which lies against the driving motion link (4) and control motion link (5) and the other side of which lies against the face of the internal ring of the deep groove ball bearing (11).

6. Four-hinged wiper arm according to one of the above claims, **characterised in that** it is equipped with a deep groove ball bearing (11) both at the first bearing (2) of the coupler (1) with the driving motion link (4) and at the second bearing (3) of the coupler (1) with the control motion link (5).

## Revendications

1. Porte-balai à quatre articulations destiné à un système d'essuie-glace, en particulier pour un véhicule, dans lequel une barre de liaison (1) est reliée de manière pivotante à une bielle oscillante d'entraînement (4) par l'intermédiaire d'un premier emplacement de palier (2), moyennant quoi le porte-balai est configuré sous la forme d'un porte-balai à quatre articulations, et comporte la barre de liaison (1) qui est reliée de manière pivotante à une bielle oscillante de commande (5) au niveau d'un deuxième emplacement de palier (3), et moyennant quoi un élément d'articulation (7) est articulé sur la barre de liaison (1), et un balai d'essuie-glace, pouvant être apposé sur l'élément d'articulation (7) ou sur une baguette d'essuie-glace (8) reliée à l'élément d'articulation (7), peut être appuyé contre la vitre à essuyer par l'intermédiaire d'un élément de ressort appliqué sur le porte-balai à quatre articulations, **caractérisé en ce que** les deux emplacements de palier (2, 3) sont dotés d'un palier à billes rainuré (11) absorbant les forces axiales et radiales, et **en ce que** la bague externe du palier à billes rainuré (11) est disposée en étant bloquée axialement et de manière résistante à la rotation dans un évidement (10) de la barre de liaison (1) ou sur la bielle oscillante d'entraînement (4) ou sur la bielle oscillante de commande (5), de préférence en étant enfoncée dans celle-ci, tandis qu'un boulon (12) fixé sur la bielle oscillante d'entraînement (4) ou sur la bielle oscillante de commande (5) ou sur la barre de liaison (1) est adapté sur la bague interne du palier à billes rainuré (11) et maintenu en étant bloqué axialement et de manière résistante à la rotation sur celui-ci, moyennant quoi le boulon (12) est configuré sous la forme d'un boulon rivé, aussi bien le palier à billes rainuré (11) que la bielle oscillante d'entraînement (4) ou la bielle oscillante de commande (5) ou la barre de liaison (1) s'engage par l'arrière respectivement avec un boulon rivé.

2. Porte-balai à quatre articulations selon l'une quelconque des revendications précédentes, **caractérisé en ce que** la bielle oscillante d'entraînement (4) et la bielle oscillante de commande (5) sont réalisées en tôle, de préférence sous la forme de pièces estampées.

3. Porte-balai à quatre articulations selon l'une quelconque des revendications précédentes, **caractérisé en ce que** le boulon utilisé sur le au moins un emplacement de palier (2, 3) est un boulon rivé (12).

4. Porte-balai à quatre articulations selon la revendication 3, **caractérisé en ce que** le boulon rivé (12) est fixé d'une part par rivetage flottant dans un ajour (13) de la bielle oscillante d'entraînement (4) ou de la bielle oscillante de commande (5) ou de la barre de liaison (2), et d'autre part fixé par un rivetage flottant sur la bague interne du palier à billes rainuré (11).

5. Porte-balai à quatre articulations selon la revendication 4, **caractérisé en ce que** le boulon rivé (12) présente, dans sa zone centrale, un collet (14) dépassant radialement, qui repose d'un côté sur la bielle oscillante d'entraînement (4) ou sur la bielle oscillante de commande (5), et de l'autre côté sur la face frontale de la bague interne du palier à billes rainuré (11).

6. Porte-balai à quatre articulations selon l'une quelconque des revendications précédentes, **caractérisé en ce que**, aussi bien au niveau du premier emplacement de palier (2) de la barre de liaison (1) avec la bielle oscillante d'entraînement (4) qu'au niveau du deuxième emplacement de palier (3) de la barre de liaison (1) avec la bielle oscillante de commande (5) est doté d'un palier à billes rainuré (11).
